# EUROPEAN PATENT APPLICATION

(11) **EP 2 955 154 A1**
(43) Date of publication of application: **16.12.2015**
(21) Application number: 14877961.4
(22) Date of filing: 28.02.2014
(51) Int. Cl.: C01B 3/38, B01J 8/04

(54) **REACTOR FOR PARTIAL OXIDATION OF HYDROCARBON GASES**

(30) Priority: 13.01.2014 RU 2014100683
(71) Applicant: Obshchestvo S Ogranichennoy Otvetstvennost'yu "Gazohim Techno", Moskovskaya obl., d. Skolkovo 143025 (RU)
(72) Inventor: DOLINSKIY, Sergey Erikovich, Moscow 119526 (RU); DERGACHEV, Alexander Alexandrovich, Moscow 107065 (RU)
(74) Representative: Bucher, Ralf Christian
(86) International application number: PCT/RU2014/000134
(87) International publication number: WO 2015/105433

(57) **Abstract**

A reactor for the partial oxidation of hydrocarbon raw material can be used for producing synthesis gas or hydrogen-enriched gas during organic synthesis in the petrochemical and gas industries. The reactor contains an outer housing having a means for outputting reaction products from the reactor and having at least one means for inputting raw material or raw material components into a catalytic sleeve which is located in the reactor with a gap between same and the outer housing; the catalytic sleeve is filled with a catalyst and includes a means for outputting products from the lower portion thereof, and is characterized in being provided with a jacket which is adjacent to at least a portion of the cylindrical wall of the catalyst sleeve, which sleeve is provided with through-holes in the area which is adjacent to the jacket; the reactor is provided with a means for inputting a coolant into the jacket, which coolant cools the catalytic sleeve and passes, through the holes in the cylindrical wall thereof, into the catalytic sleeve. Cooling the catalytic sleeve allows for decreasing the heat resistance requirements and the corrosion resistance requirements of the material used for producing the catalytic sleeve.

## Description

The invention relates to contact-type devices that are used for oxidative conversion of hydrocarbonaceous gases through processes of steam-oxygen reforming to obtain hydrogen or synthesis gas for the chemical industry.

Catalytic partial oxidation of hydrocarbonaceous feedstock in the presence of oxygen and water steam (steam-oxygen reforming) is found to be a promising process because it allows to obtain synthesis gas at lower temperatures than partial oxidation by free oxygen does and, provided its feedstock has a definite composition, in the case of autothermal reforming requires no heat input to a reaction zone as steam reforming does.

Steam-oxygen reforming of hydrocarbonaceous feedstock is carried out as follows. The heated components - hydrocarbonaceous feedstock, water steam, and oxygen or oxygen-containing gas (usually air or oxygen-enriched air) are being mixed up and fed to a reactor with a catalyst placed in it. The zone of contact of the feedstock with the catalyst forms the reaction zone. In the upper part of the reaction zone fast exothermic reactions of oxidation of methane and other hydrocarbons alongside with endothermic reactions of steam reforming of hydrocarbons occur with the share of the latter growing up downstream lowering the bed outlet temperature. The temperature profile across the height of the catalyst layer has a distinct hump in the front layer of the catalyst (10-15% of the catalyst total height). In theory, a heating-up temperature of a gaseous mixture in the front layer of a catalyst of partial oxidation exceeds 1200°C and is only limited by the beginning of the highly endothermic reaction of water steam molecule dissociation. The reaction product - a mixture of hydrogen, carbon oxides and water steam - is removed from the reaction zone at a temperature of not more than 1000°C, cooled down, separated from water, and flowed to further processing, for example, to the synthesis of hydrocarbons via the Fischer-Tropsch process. In some cases, cooling of products includes quenching by direct heat exchange with water or in a special device, or in a quenching zone downstream the reaction zone in the reactor (US5358696, US6797022).

A catalyst used for conversion of hydrocarbonaceous feedstock to synthesis gas may be prepared in the form of bulk material or in the form of blocks (consisting of plates, tapes, foamed materials) of heat-conducting elements made of ceramics or metal alloys with a developed external surface, which has a layer of a catalytically-active substance deposited on it. The temperature increase in the catalyst layer accelerates its structural degradation and lowering of catalytic activity.

The problem of catalyst overheating is more or less successfully being solved in an isothermic reactor. In order to create close to isothermic conditions in the reaction zone there are used reactors of tubular heat exchanger type (for example, a tubular reactor (in patent US8216531), heat-conducting elements (for example, heat-conducting plates in a catalyst layer within a reactor in patent RU2175799), as well as specifically arranged conditions of mass- and heat-transfer in the reaction zone (a fluidized bed in US4888131, turbulent regime of reactor flows in application WO2013008020).

Provided a catalyst of steam-oxygen reforming possesses sufficient heat resistance and the raise of temperature in its front layer till 1200°C does not incur its quick deactivation, and complication of reactor design and its operating systems is undesirable (for example, in case of package units for synthesis gas production to be used in remote fields), an utilization of a heat-conducting catalyst support and specific heat-conducting elements in the catalyst layer seems to be sufficient for temperature equalization throughout the reaction zone. A catalyst in the form of gas-permeable blocks can be placed in a metal sleeve (cup), which outer diameter is less than the inner diameter of the reactor pressure vessel, with the gap between the pressure vessel and the sleeve filled in with a heat-insulating material. A reactor with such elements is disclosed in application for an invention RU2012107731 taken as a prototype. But a metal alloy, which the sleeve is made from, should be enough heat- and corrosion-resistant under conditions of the working temperatures in the reaction zone, i.e. at temperatures of 1200°C and higher. Such alloys are of high cost. Decreasing the temperature of the catalyst sleeve wall till 1000°C and lower allows to make it from a relatively inexpensive heat-resistant alloy, for example, of XH45IO grade, which is corrosion-resistant till the temperature of 1200°C.

A technical task this invention is addressed to - decreasing of the temperature of the catalyst sleeve wall till 1000°C and lower. A technical decision is cooling of the catalyst sleeve by a cooling agent - water steam and/or an inert under the reaction conditions gas or an admixture of such gases, for example, nitrogen, synthesis gas. Supplied to the jacket a cooling agent cools the catalyst sleeve wall and enters through open-end holes in the catalyst sleeve wall into the catalyst sleeve into the catalyst layer.

A proposed reactor for partial oxidation of carbonaceous feedstock comprises a pressure vessel with the means for reaction products outlet and with at least one means for feedstock, or components of feedstock, inlet into the placed within the reactor with a gap between the pressure vessel catalyst sleeve filled in with a catalyst and comprising the means of products outlet in its lower part, and differs in that the catalyst sleeve is furnished with a jacket adjacent to at least a part of the cylindrical wall of the catalyst sleeve that has open-end holes in the adjacency zone and the reactor is furnished with a means of inlet into the jacket of the cooling agent that cools the catalyst sleeve and then enters the catalyst sleeve through the open-end holes in the cylindrical wall.

The jacket cooling the catalyst sleeve is located at the outer side of its cylindrical wall and is adjacent to at least a part of its surface. The jacket may wrap the cylindrical wall of the catalyst sleeve in whole or its upper, most hot part. The catalyst sleeve wall being cooled by the direct contact with a cooling agent is made with open-end holes along the full height or only an upper part - the zone where the temperature of a catalyst exceeds 1000°C. The hole sizes, their amount, the distance between the holes and the amount of a cooling agent supplied to the jacket of the catalyst sleeve are chosen out of necessity to guarantee the temperature of the catalyst sleeve wall is not above a defined limit. For example, with decreasing the temperature of the catalyst sleeve wall at least till 1000°C it would become possible to make it from the steel of grade XH45IO, which is corrosion-resistant till the temperature of 1200°C. The cooling agent inflow into the catalyst layer through the open-end holes in the catalyst sleeve wall may prevent the catalyst sleeve wall from the contact in this zone with the oxygen of the reaction mixture thus inhibiting material corrosion.

As a cooling agent there may be used water steam or synthesis gas obtained in the reactor and cooled down at later stages of reactor products treatment. It is preferable to utilize water steam, which, entering the catalyst sleeve contacts with the catalyst it is filled with and takes part in the reaction of steam reforming of hydrocarbonaceous feedstock. The jacket is furnished with at least one means of a cooling agent inlet.

Hydrocarbonaceous feedstock and necessary for its partial oxidation components - oxygen or oxygen-containing gas, water and, sometimes, carbon dioxide - are fed to the reactor as a single mixed flow or it is used a distributed inlet of a feedstock mixture or its components. The way of feedstock supply does not relate to the substance of the present invention.

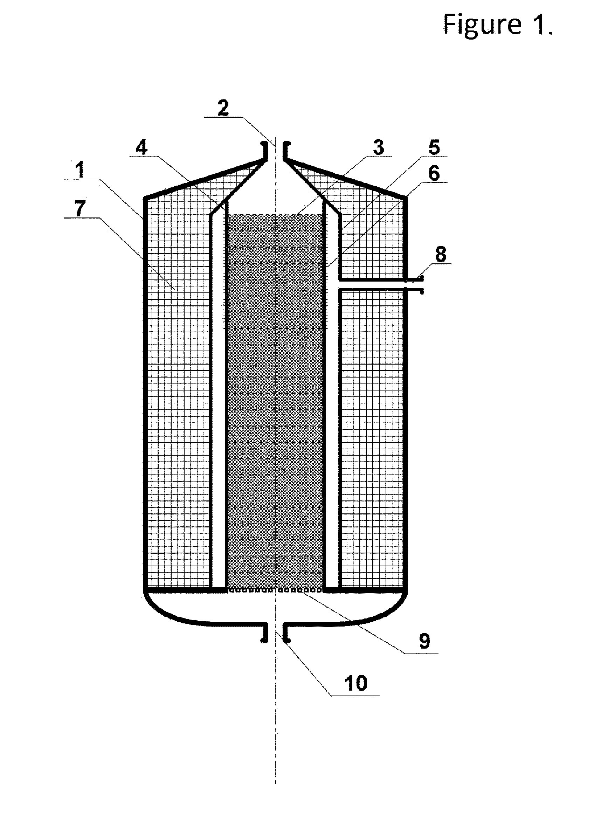

The scheme of a reactor for partial oxidation of hydrocarbonaceous gases with a cooling jacket along the full height of the catalyst sleeve is represented on Fig. 1. Catalyst sleeve 4 furnished with jacket 5 is placed within reactor pressure vessel 1 with filled in with a heat-insulating material gap 7. In catalyst sleeve 4 there is placed catalyst 3 for partial oxidation of hydrocarbonaceous feedstock. The catalyst sleeve wall is made with open-end holes 6 and its bottom is furnished with means of product outlet 9 from the catalyst sleeve. The reactor is equipped with means of feedstock (feedstock mixture) inlet 2 into catalyst sleeve 4, means of product outlet 10 from the reactor as well as means of cooling agent inlet 8 into the catalyst sleeve jacket.

The reactor operates as follows. Heated feedstock mixture through a means of feedstock inlet enters the catalyst sleeve, contacts with the catalyst placed in it to form reaction products. A cooling agent through a means of inlet enters the catalyst sleeve jacket, cools it and through the holes in the catalyst sleeve wall enters inwards and is mixed up with the reaction medium. The product containing the cooling agent or products of its conversion when in contact with the catalyst is flowed out from the catalyst sleeve via the means of product outlet from the catalyst sleeve and via the means of product outlet from the reactor and then directed to further treatment including cooling.

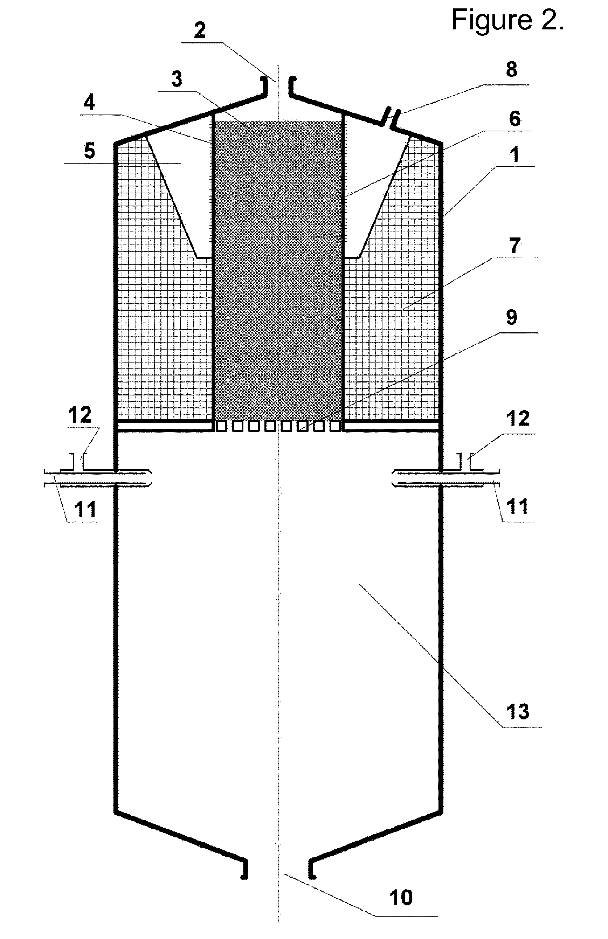

The scheme of a reactor for partial oxidation of hydrocarbonaceous gases with a cooling jacket in an upper zone of the catalyst sleeve and a cooling chamber for reaction products is represented on Fig. 2. Catalyst sleeve 4 furnished with jacket 5 is placed within reactor pressure vessel 1 with filled in with a heat-insulating material gap 7. In catalyst sleeve 4 there is placed catalyst 3 for partial oxidation of hydrocarbonaceous feedstock. The catalyst sleeve wall is made with open-end holes 6 and its bottom is furnished with means of product outlet 9 from the catalyst sleeve to cooling chamber for reaction products 13 placed downstream in the reactor pressure vessel. Catalyst sleeve jacket 5 is furnished with means of cooling agent inlet 8. The reactor is equipped with means of feedstock (feedstock mixture) inlet 2 into catalyst sleeve 4, means of product outlet 10 from the reactor, means of cooling agent inlet 8 into the catalyst sleeve jacket as well as means of water inlet 11 and spraying gas inlet 12 into the cooling chamber of reaction products.

The reactor operates as follows. Heated feedstock mixture through a means of feedstock inlet enters the catalyst sleeve, contacts with the catalyst placed in it to form reaction products. A cooling agent through a means of inlet enters the catalyst sleeve jacket, cools it and through the holes in the catalyst sleeve wall enters inwards and is mixed up with the reaction medium. The product containing the cooling agent or products of its conversion when in contact with the catalyst is flowed out from the catalyst sleeve via the means of product outlet from the catalyst sleeve and then directed to the product cooling chamber fed with water and spraying gas. The cooled down products mixed up with water vapors and spraying gas are flowed out via the means of product outlet from the reactor and then directed to further treatment.

A design of the reactor and a cooling agent amount for cooling the catalyst sleeve wall is determined on the basis of requirements as to its temperature, productive capacity of the reactor, an area of the cooling surface and cooling agent specifications. A temperature of the catalyst sleeve wall should preferably not exceed 1000°C though other choices are possible including utilization of a cooling jacket for cooling the most thermally loaded zone of the catalyst sleeve.

## Claims

1. A reactor for partial oxidation of hydrocarbonaceous feedstock comprising a pressure vessel with a means of outlet of reaction products and at least one means of inlet of feedstock, or feedstock components, into the placed within the reactor with a gap catalyst sleeve filled in with a catalyst and comprising means of product outlet in its lower part and differing in that the catalyst sleeve is furnished with a jacket adjacent to at least a part of the cylindrical wall of the catalyst sleeve, which is made with open-end holes in the adjacency zone of the jacket, and the reactor is equipped with a means of inlet into the jacket of a cooling agent that cools the catalyst sleeve and then enters into the catalyst sleeve through the holes in its wall.

2. The reactor from claim 1 differing in that water steam, synthesis gas or their admixture is used as a cooling agent.

3. The reactor from claim 1 differing in that there is gap between the catalyst sleeve jacket and the reactor pressure vessel filled in with a heat-insulating material.

4. The reactor from claim 1 differing in that it additionally comprises a cooling chamber for cooling products with water that is connected with the catalyst sleeve via the means of product outlet from the catalyst sleeve with the water supplied to the cooling chamber via a means of water inlet that is the reactor equipped with.

5. The reactor from claim 1 differing in that it is additionally equipped with a means of inlet to the product cooling chamber of a water spraying gas.

6. The reactor from claim 1 differing in that the means of cooling agent inlet into the catalyst sleeve jacket is made with a possibility to supply a cooling agent in amounts sufficient for cooling the catalyst sleeve till at least 1000°C.
